# EUROPEAN PATENT APPLICATION

(11) **EP 4 718 234 A1**
(43) Date of publication of application: **01.04.2026**
(21) Application number: 24203340.5
(22) Date of filing: 27.09.2024
(51) Int. Cl.: G06F 8/41, G06F 9/50, G06N 3/063, G06N 3/0985

(54) **A METHOD FOR DETERMINING A HARDWARE ARCHITECTURE FOR A MACHINE LEARNING MODEL**

(71) Applicant: Robert Bosch GmbH, 70442 Stuttgart (DE)
(72) Inventor: Rai, Shubham, 71263 Weil Der Stadt (DE); Braatz, Yannick, 27337 Intschede (DE)

(57) **Abstract**

The invention relates to a method (100) for determining an hardware architecture (3) for a machine learning model (50), comprising:
- Providing (101) an initial hardware architecture (1), the initial hardware architecture (1) describing hardware components (2) and computing characteristics of said hardware components (2),
- Providing (102) the machine learning model (50),
- Converting (103) the machine learning model (50) to an intermediate representation, the intermediate representation depicting a topology and/or a temporal structure of the machine learning model (50) as a graph structure,
- Analysing (104) the intermediate representation to determine a memory footprint of the machine learning model (50),
- Determining (105) the hardware architecture (3) for the machine learning model (50) based on the initial hardware architecture (1) and a result of the analysing (104).
Furthermore, the invention relates to a computer program, an apparatus, and a storage medium for this purpose.

## Description

The invention relates to a method for determining a hardware architecture for a machine learning model. Furthermore, the invention relates to a computer program, an apparatus, and a storage medium for this purpose.

### State of the art

Custom hardware solutions for neural network applications are integral for achieving low latency, and energy consumption. Defining memory accesses and implementing different kinds of accelerators are essential factors to think before hardware designs. The present state-of-the-art looks at this problem in hardware-first fashion where the elements of hardware are designed before the neural network is mapped on to that. On the other hand, the design of neural networks is mostly done in hardware agnostic way where accuracy is given preference often carried out by an automated loop called Neural Architecture Search (NAS).

In a typical Neural Architecture Search (NAS) flow, there is a network design space which defines all the possible operations and connections that are possible in a given network structure. The fixed architecture block generates a neural network (NN) candidate which is then trained and validated to return an accuracy metric. The accuracy metric is then fed to the optimiser that evaluates whether the achieved accuracy is optimal for the given usecase. This iterative loop is key to feed back the network design space to get a network that gives the best accuracy. However, this approach is accuracy-centric in terms of metric optimisation and does not give any indication about physical parameters such as latency or energy consumption in case of hardware deployment.

To circumvent the above issue, HW-NAS proposes including a deployment stack in the above flow to measure the latency and energy consumption estimates for a given hardware model.

Alternatively, a Co-NAS approach offers another degree of freedom to the above HW-NAS where a hardware-configurable space is added in the mix. This way the deployment stack uses a predefined configuration lists to choose the best hardware candidate for deploying the neural network candidate.

While these methods (HW-NAS or Co-NAS) give an evaluation of the entire model in terms of latency and energy consumption, it does not offer any information in terms of changes that can be applied on the given hardware design. Hardware design is considered as an abstracted step away from this entire flow and is usually carried out as a separate design step. Hence, any modification in the parameters of the hardware space is totally dependent on the expertise of the hardware designer to carry out the design changes as required to improve on the metrics such as latency or energy consumption. These design changes include configurations parameters such as - buffer size, number of processing elements, memory size, bandwidth etc. Such a manual-intensive method is usually time consuming and can lead to sub-optimal design decisions.

### Disclosure of the invention

According to aspects of the invention a method with the features of claim 1, a computer program with the features of claim 9, a data processing apparatus with the features of claim 10 as well as a computer-readable storage medium with the features of claim 11 are provided. Further features and details of the invention are disclosed in the respective dependent claims, the description and the drawings. Features and details described in the context to the inventive method also correspond to the inventive computer program, the inventive data processing apparatus as well as the inventive computer-readable storage medium, and vice versa in each case.

According to an aspect of the invention a method for determining a hardware architecture for a machine learning model is provided, the method comprising:
- Providing an initial hardware architecture, the initial hardware architecture describing hardware components and computing characteristics of said hardware components,
- Providing the machine learning model,
- Converting the machine learning model to an intermediate representation, the intermediate representation depicting a topology and/or a temporal structure of the machine learning model as a graph structure,
- Analysing the intermediate representation to determine a memory footprint of the machine learning model,
- Determining the hardware architecture for the machine learning model based on the initial hardware architecture and a result of the analysing.

The initial hardware architecture may represent an actual hardware setup that may be enhanced by means of the method according to the invention. The initial hardware architecture may also be a model of a hardware setup so that the actual hardware setup may be provided after determining the hardware architecture for the machine learning model by means of the method according to the invention. The determined hardware architecture may then be implemented on an actual hardware setup to carry out the machine learning model thereon. The temporal structure may describe a sequence of operations of the machine learning model during an execution thereof. According to the invention, it is thus possible to determine a hardware architecture by considering both the computational characteristics of the hardware components and the memory footprint of the machine learning model. The analysis of the intermediate representation may allow for a detailed understanding of the machine learning model's data dependencies and execution flow, enabling informed decisions about resource allocation. The method may be performed iteratively to refine the hardware architecture, leading to an efficient mapping of the machine learning model onto the hardware architecture. The approach according to the invention may minimize wasted computation time and energy consumption while also not being dependent upon actual hardware setups to determine the hardware architecture.

The computing characteristics may comprise a memory hierarchy, a buffer size, a bandwidth and/or a type of a respective hardware component. It is possible by means of the method according to the invention to analyse the memory footprint

by considering the types of operations performed in the machine learning model and their data requirements. The hardware architecture may then provide an allocation of specific hardware components within the memory hierarchy based on the determined memory footprint, considering factors like buffer size, bandwidth, and hardware component type. This may enable efficient data access patterns and reduce memory bottlenecks during an execution of the machine learning model.

The memory footprint may comprise an information regarding read and/or write accesses of the machine learning model over a Dynamic Random Access Memory (DRAM) and/or a Static Random Access Memory (SRAM) of the initial hardware architecture. It is possible that the analysis thus considers the memory access patterns of the machine learning model, including reads and writes to both DRAM and SRAM within the initial hardware architecture. This granular memory footprint information may guide the optimisation process by identifying potential memory bottlenecks and informing decisions about memory allocation and caching strategies within the hardware architecture. The inclusion of this detail may enhance an accuracy and effectiveness of the optimisation process.

It is possible that the intermediate representation is a directed acyclic graph and/or an Abstract Syntax Tree. It is thus possible for the intermediate representation to be structured as a directed acyclic graph (DAG) or an Abstract Syntax Tree (AST). This structure may allow for a more precise and detailed representation of the machine learning model's operations and dependencies. A DAG for example may effectively capture the sequential flow of data and computations within the model, while an AST may represent the syntactic structure of the machine learning model's code.

It is also possible that determining the hardware architecture comprises:
- Performing at least one compiler optimisation, particularly including loop unrolling and/or loop tiling.

It is possible that performing these compiler optimisations may improve the efficiency of the machine learning model execution on the hardware architecture. Loop unrolling may involve expanding a loop by duplicating its body multiple times, reducing the number of iterations required to complete the loop. This may

improve a performance by reducing an overhead of loop control and increasing the efficiency of the processor's instruction pipeline. Loop tiling, also known as loop blocking, may involve dividing a loop into smaller sub-loops, or tiles, that may be executed in parallel. This may improve performance by reducing the number of cache misses and increasing the efficiency of the processor's memory hierarchy. These optimisations may lead to faster computation times and reduced energy consumption.

It is further possible that the method further comprises:
- Providing a composite function for at least one parameter in a hardware configuration space for configuring the initial hardware architecture, the composite function determining a multi-objective goal of an accuracy of the machine learning model and/or a latency in an execution of the machine
learning model and/or an energy consumption of the machine learning model. The hardware configuration space may comprise a set of parameters of the hardware architecture that may be configured during the optimisation process according to the invention. The at least one parameter may for example be a data transfer bandwidth of hardware components or a memory layout of the hardware architecture for storing input and output data. The composite function may enable the optimisation process to consider multiple factors beyond just performance metrics. This multi-objective approach may allow for a more balanced hardware architecture design, taking into account factors like accuracy, execution speed, and energy efficiency. By incorporating these diverse objectives, the method according to the invention may identify configurations for the hardware architecture that are not only computationally efficient but also power-aware and suitable for specific application requirements.

It is also possible that the method further comprises:
- Estimating a required energy consumption and/or performance for the hardware architecture based on a result of the analysing of the intermediate representation,
- Utilizing the provided composite function to determine a range of values for the at least one parameter in the hardware configuration space based on the estimated energy consumption and/or performance.

The estimation of energy consumption and performance may enable a trade-off analysis between efficiency and speed. By utilizing the composite function, the method may explore various hardware configurations within a defined parameter range, ultimately leading to a hardware architecture that balances performance, energy consumption, and memory usage.

The method may further comprise:
- Optionally, outputting a layout of the hardware architecture and/or manufacturing the hardware architecture according to the layout;
- Deploying the hardware architecture, wherein the initial hardware architecture is configured based on the determined range of values for the at least one
parameter in the hardware configuration space.

The hardware architecture may be deployed on a physical hardware system that is represented by the hardware architecture.

In another aspect of the invention, a computer program may be provided, in particular a computer program product, comprising instructions which, when the computer program is executed by at least one computer, cause the computer to carry out the method according to the invention. Thus, the computer program according to the invention can have the same advantages as have been described in detail with reference to a method according to the invention.

In another aspect of the invention, an apparatus for data processing may be provided, which is configured to execute the method according to the invention. As the apparatus, for example, at least one computer can be provided which executes the computer program according to the invention. The computer may include at least one processor that can be used to execute the computer program. Also, a non-volatile data memory may be provided in which the computer program may be stored and from which the computer program may be read by the processor for being carried out.

According to another aspect of the invention a computer-readable storage medium may be provided which comprises the computer program according to the invention and/or instructions which, when executed by at least one computer, cause the computer to carry out the steps of the method according to the

invention. The storage medium may be formed as a data storage device such as a hard disk and/or a non-volatile memory and/or a memory card and/or a solid state drive. The storage medium may, for example, be integrated into the computer.

Furthermore, the method according to the invention may be implemented as a computer-implemented method. Alternatively or additionally, at least one of the disclosed method steps may be computer-implemented and/or automated.

Further advantages, features and details of the invention will be apparent from the following description, in which embodiments of the invention are described in detail with reference to the drawings. In this context, the features mentioned in the claims and in the description may each be essential to the invention individually or in any combination. Showing:
- Fig. 1:: A method, a machine learning model, a computer program, a storage medium and apparatus according to embodiments of the invention,
- Fig. 2:: An initial hardware architecture and a hardware architecture according to embodiments of the invention.

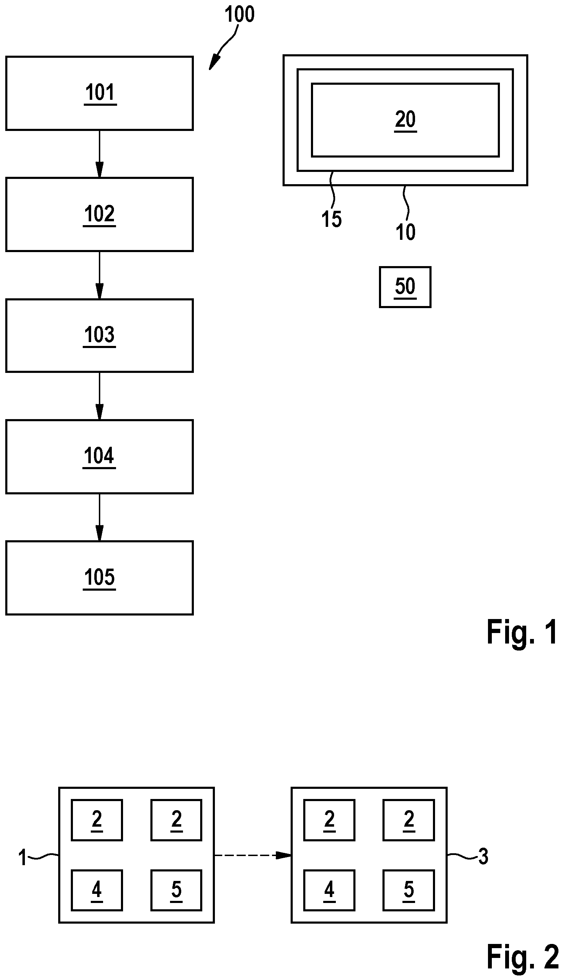

Fig. 1 shows a method 100, a machine learning model 50, computer program 20, a storage medium 15 and apparatus 10 according to embodiments of the invention.

Fig. 1 particularly shows an embodiment of a method 100 for determining an hardware architecture 3 for a machine learning model 50. In a first step 101, an initial hardware architecture 1 is provided, the initial hardware architecture 1 describing hardware components 2 and computing characteristics of said hardware components 2. In a second step 102, the machine learning model 50 is provided. In a third step 103, the machine learning model is converted to an intermediate representation, the intermediate representation depicting a topology and/or a temporal structure of the machine learning model 50 as a graph structure. In a fourth step 104, the intermediate representation is analysed to determine a memory footprint of the machine learning model 50. In a fifth step 105, the hardware architecture 3 for the machine learning model 50 is determined based on the initial hardware architecture 1 and a result of the analysing 104.

Fig. 2 schematically shows an initial hardware architecture 1 and an hardware architecture 3 according to embodiments of the invention. Both hardware architectures 1,3 comprise hardware components 2, a dynamic random access memory 4 and a static random access memory 5. The dashed arrow depicts the optimisation process according to the invention.

The invention according to embodiments uses an intermediate representation as found in common compiler stacks such as TVM, or Google OpenXLA to get insights about a hardware design. An intermediate representation may be modeled over a directed acyclic graph (DAG) or an Abstract Syntax Tree (AST) and is particularly a ubiquitous graph structure depicting the structure of a given machine learning model. This intermediate representation may be exposed to both the hardware search space as well as the machine learning model. Hence, the compiler stack may be exposed to both the hardware and software as follows. The intermediate representation may model a topology and a temporal structure of the machine learning model. Hence, the compiler stack may be aware of the data and memory footprints of the machine learning model. The compiler stack may also know an initial hardware architecture of the target hardware. This information may be readily used at the intermediate representation level to calculate hardware configurations for a given machine learning model.

Hence, the compiler may use the above two information in conjunction to provide an insight that may be fed back to the design exploration of the hardware space, thereby alleviating the need of manual intervention.

The compiler may use the meta information from both the hardware target as well as the machine learning model to give insights about possible changes in the hardware architecture.

These are particularly as follows: From the machine learning model perspective, a parsing step of this intermediate representation may provide information about

the memory footprint of a given machine learning model and how to map them on the hardware. This may be dependent on configurable factors of the machine learning model such as quantization, number of residual connections and operations in the given neural network. Detailed information about memory footprint such as read/write access over the DRAM or SRAM memory banks may provide vital information about physical parameters that can be crucial for hardware design. From the hardware perspective, the compiler may know the design aspects of the hardware such as memory hierarchy (L1 or L2), buffer size, bandwidth, types of processing elements etc. as it particularly needs to map the machine learning model to the given hardware. These parameters may play a crucial role in parallelizing or serializing various operations on a given hardware to achieve best possible performance in terms of latency or energy consumption. The intermediate representation may also be aware of the temporal structure of the machine learning model. This particularly implies that the compiler stack knows about the sequence of operations.

The above factors may be formulated in a mapping space as follows and may be denoted by the following variables:
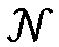 = *set of machine learning model candidates given by the SW space*
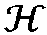 = *configuration space for the HW space*
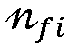 *= compiler optimizations such as loop unrolling, loop tiling etc.*
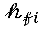 *= individual HW parameters such as memory bandwidth, buffer space*
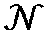 = *f* ( 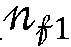 , 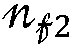 , ... , 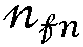 )
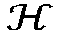 = *f* ( 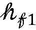 , 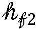 , ... , 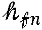 )
*Objective goal*: 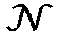 ↔ 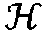

Within embodiments of the invention, the compiler may aim to achieve the above objective goal by creating a mapping between these two spaces 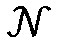 and 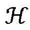 so that it may return a best possible insight for a given 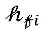 that returns the final hardware metric(es). This particular hardware metric may be dependent on machine learning model parameters 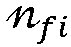 .

For example, memory hierarchy in the hardware design may be a crucial component. As discussed above, the memory hierarchy is particularly defined separately during the hardware design phase. Poor design of the memory hierarchy may cause bottleneck particularly for machine learning models that have lots of residual connection. With the invention according to embodiments, the compilation phase may parse the machine learning model and may provide insight to the memory hierarchy with quantifiable hardware metric without carrying out the deployment stack thereby saving multiple deployment iterations and providing potential speed-ups.

Below is a pseudo Code for a possible implementation of the invention according to an embodiment:

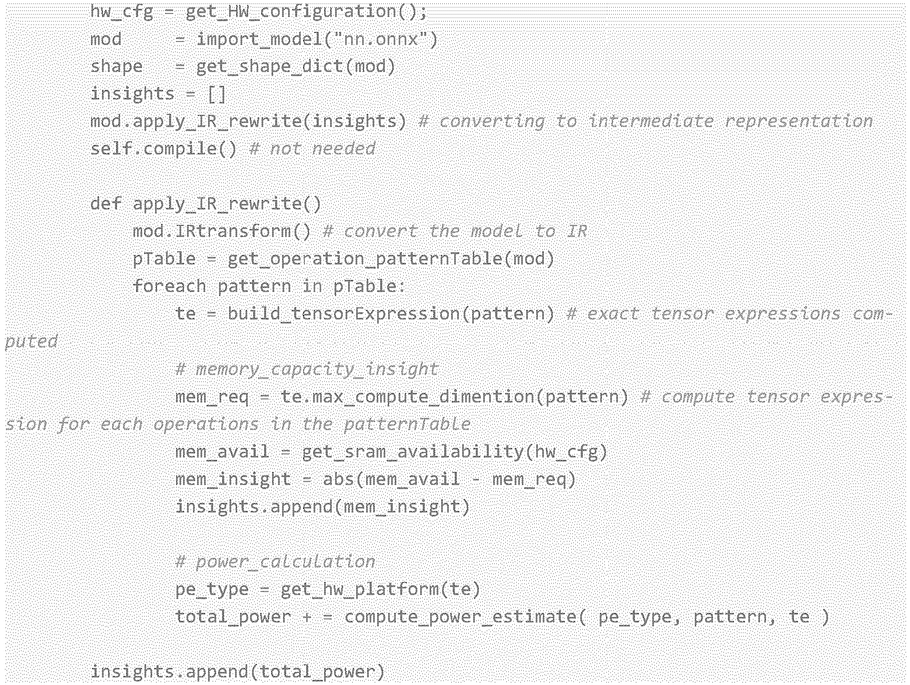

The list (insights) may be a json file to compute all the parameters for the hardware architecture. An actual deployment is particularly not necessary in this step and hence iteration cycles may be saved.

Intermediate representations (IR) of machine learning model architectures or individual operands, typically found in the context of machine learning compilers, may be used to gather knowledge about hardware and software parameters at the beginning of a deployment process. Examples of intermediate representations are Ilvm , and TVM's network level IR Relay as well as TVM's operator level IR TensorIR.

The invention according to embodiments is particularly not restricted to the context of compilers, but only to intermediate (particularly graph-based) representations of structural similarity that are common in most compilers. An intermediate representation may not have to represent machine learning operators and operator connections in an abstract way that models the software program of the operator in a format that mimics the temporal execution of program steps. A graph-based representation wherein the topology may express a loop-nest order and operation parameters may be one example of a valid intermediate representation definition.

Depending upon the variety of machine learning models that need to be deployed on the given hardware architecture, the invention according to embodiments particularly aims to return composite functions for more than one parameter in the hardware configuration space that determines the multi-objective goal of accuracy, latency, energy consumption etc. for the finally deployed model on the hardware. For example - designing an energy efficient (or power efficient) hardware for deploying machine learning models may depend upon multiple factors from both hardware and software side. From the hardware side, factors such as - memory bandwidth, memory hierarchy, bandwidth etc. and from the software side, factors such as quantization, residual connection etc. may be relevant for energy consumption estimations. The invention according to embodiments particularly aims to use the intermediate representation to solve this problem by computing a composite function for hardware configuration parameters to return a range of values for hardware configurations for the required energy consumption (or performance) estimation.

Within the compiler stack, either the entire network graph (Relay), or the loop-structure of a particular machine learning operator (TensorIR (TIR)), as

Convolution, may be represented as directed acyclic graphs (DAG) or an abstract syntax tree (AST), respectively. An example of a convolution operator defined in TensorIR may be extended by a loop-structure for data transfer in addition to the matrix-matrix multiply operation.

For TVM's TIR, the AST topology may represent the temporal structure of the for-loops and the nested computations. Relevant information for the lowered program code that will be executed on the potential backend may be available at this point. Even optimised kernels that correlate to hardware-specific operations may be included here.

Considering a flexible hardware architecture as the designated hardware backend, the AST may be filtered for information relevant for the hardware architecture. Flexible herein means the hardware architecture may adjust some of the parameters such as the data transfer bandwidth of some hardware components, or the memory layout for storing input and output data. Another important aspect is the mapping of machine learning operators onto the hardware architecture. Mapping may assign an execution of parts of the machine learning operator program to a specific unit of the hardware architecture. Mapping efficiency may involve a composite function determined by several factors, as minimal stall times of hardware units and leveraging most compute and data transfer operations to units with most parallelization or bandwidth, respectively.

By defining heuristics that characterize an influence on all of those parameters the information found at the intermediate representation may be leveraged to either 1) estimate whether the current intermediate representation program is inefficient on the hardware architecture, because the demands exceed the hardware adjustment potential and so the deployment and execution on the device/simulator can be denied, or 2) estimate the potentially optimised configuration for the hardware architecture from the hardware configuration space to execute the operator on. For the 2^{nd} case the hardware architecture may be configured as suggested by the estimations and the operator from the intermediate representation may be lowered to deployable code and executed on the device/simulator.

Following this scheme may deny a sequential Co-NAS process of first configuring a hardware model and then deploying the operator or vice-versa, testing a lot of machine learning model and hardware architecture configurations that are inefficient. The entire Co-NAS search may be sped-up to find optimal solutions fast by denying the costly testing of inefficient machine learning models and hardware architecture configurations on the backend.

An example of this procedure is described hereinbelow. A data transfer of filters from external memory to the on-chip memory SRAM may be performed. From the loops inside the box (oc, ic, kh, kw) and the data type length (int_8) the data transfer length may be calculated in a simple multiplication. Following this scheme, data transfers for all relevant data types, such as input and output feature maps, along the convolution operator may be calculated. Afterwards a program that gets access to high-level information of the hardware backend and the calculated transfer length may be leveraged for all operators to assign the memory bandwidth of on-chip SRAMs according to the calculated values and/or divide the data transfer bandwidth of on-chip busses and DMAs to execute the data transfers as fast as possible.

Similarly, the procedure may be executed for all intermediate representation regions that are offloaded to specific hardware units of the hardware architecture. As this may lead to multiple hardware factors, i.e. the composite function according to the invention, that need to be adjusted for a single loop-program, common optimisations techniques, involving cost-models and machine learning based predictors, may be leveraged at this stage to find the most beneficial configuration for the hardware architecture. As the hardware efficiency may also be determined by the mapping of operations the exploration of mapping options may be involved inside this step as well.

This may be a sequential step and may need to happen before the previously described process of hardware configuration. Common mapping-aware operator-level modifications, such as loop-tiling or unrolling, and the assignment of selected loop nests to hardware units may be applied to a machine learning operator when building the intermediate representation. The resulting intermediate representation may then already comprise the information of the currently selected mapping. The variety of optional operator-level modifications may represent a separate space of mappings, referred to as the mapping space.

The invention according to embodiments may therefore include an additional optimisation loop on the mapping space, applied inside the Co-NAS loop in between the machine learning model candidate selection and the hardware deployment. Herein, another optimisation loop may be embedded on the potential mapping options of a candidate machine learning model from the software space onto an accelerator architecture from the hardware configuration space.

Each mapping may comprise a fixed set of parameters (as loop unrolling, loop tiling and hardware assignments to specific loop-levels). Inside the mapping, loop mapping efficiency may be determined by leveraging common prediction methodologies that estimate the influence on the mapping efficiency by considering the current mapping set 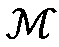 , the machine learning model and the hardware parameters. Obtained mapping efficiency may update the cost-model C to select the next mapping set. In parallel, the current mapping set 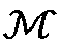 may be applied to layers of the currently selected machine learning model. Next, the mapping changes may be applied to the intermediate representation structure of the machine learning model and it may be aimed to find the most efficient representation for executing this machine learning model on the target hardware. Afterwards relevant information for the execution onto hardware may be gathered from the intermediate representation structure, for example the AST. The information may be gathered to determine the hardware demands necessary to execute all the detected hardware operations. The gathered information may be forwarded with parameters of a current configuration for the hardware architecture into an optimisation algorithm (can be e.g., machine learning based or a mathematical model) to determine a most favorable configuration for the hardware architecture to execute the machine learning model on. The current configuration may then be configured as dictated by the optimiser and the machine learning model lowered from the current intermediate representation into a hardware executable code format to then be finally deployed and run on the hardware architecture. The performance, e.g., latency, energy consumption, measured on the hardware model may be forwarded to the controller of the outer-most Co-NAS loop, along with accuracy of the machine learning model that has been trained in parallel, to select the next machine learning model/hardware pair.

The above explanation of the embodiments describes the present invention in the context of examples. Of course, individual features of the embodiments can be freely combined with each other, provided that this is technically reasonable, without leaving the scope of the present invention.

## Claims

1. A method (100) for determining a hardware architecture (3) for a machine learning model (50), comprising:
- Providing (101) an initial hardware architecture (1), the initial hardware architecture (1) describing hardware components (2) and computing characteristics of said hardware components (2),
- Providing (102) the machine learning model (50),
- Converting (103) the machine learning model (50) to an intermediate representation, the intermediate representation depicting a topology and/or a temporal structure of the machine learning model (50) as a graph structure,
- Analysing (104) the intermediate representation to determine a memory footprint of the machine learning model (50),
- Determining (105) the hardware architecture (3) for the machine learning model (50) based on the initial hardware architecture (1) and a result of the analysing (104).

2. The method (100) of claim 1, **characterized in that** the computing characteristics comprise a memory hierarchy, a buffer size, a bandwidth and/or a type of a respective hardware component (2).

3. The method (100) of any one of the preceding claims, **characterized in that** the memory footprint comprises an information regarding read and/or write accesses of the machine learning model (50) over a Dynamic Random Access Memory (4) and/or a Static Random Access Memory (5) of the initial hardware architecture (1).

4. The method (100) of any one of the preceding claims, **characterized in that** the intermediate representation is a directed acyclic graph and/or an Abstract Syntax Tree.

5. The method (100) of any one of the preceding claims, **characterized in that** determining (105) the hardware architecture (3) comprises:
- Performing at least one compiler optimisation, particularly including loop unrolling and/or loop tiling.

6. The method (100) of any one of the preceding claims, **characterized in that** the method (100) further comprises:
- Providing a composite function for at least one parameter in a hardware configuration space for configuring the initial hardware architecture (1), the composite function determining a multi-objective goal of an accuracy of the machine learning model (50) and/or a latency in an execution of the machine learning model (50) and/or an energy consumption of the machine learning model (50).

7. The method (100) of claim 6, **characterized in that** the method (100) further comprises:
- Estimating a required energy consumption and/or performance for the hardware architecture (3) based on a result of the analysing (104) of the intermediate representation,
- Utilizing the provided composite function to determine a range of values for the at least one parameter in the hardware configuration space based on the estimated energy consumption and/or performance.

8. The method (100) of claim 7, **characterized in that** the method (100) further comprises:
- Deploying the hardware architecture (3), wherein the initial hardware architecture (1) is configured based on the determined range of values for the at least one parameter in the hardware configuration space.

9. A computer program (20), comprising instructions which, when the computer program (20) is executed by at least one computer (10), cause the computer (10) to carry out the method (100) of any one of the preceding claims.

10. A data processing apparatus (10), comprising means for carrying out the method (100) of any one of claims 1 to 8.

11. A computer-readable storage medium (15) comprising instructions which, when executed by at least one computer (10), cause the computer (10) to carry out the steps of the method (100) of any one of claims 1 to 8.

## Amended claims

### Amended claims in accordance with Rule 137(2) EPC.

1. A method (100) for determining a hardware architecture (3) for a machine learning model (50), comprising:
- Providing (101) an initial hardware architecture (1), the initial hardware architecture (1) describing hardware components (2) and computing characteristics of said hardware components (2), wherein the computing characteristics comprise a memory hierarchy, a buffer size, a bandwidth and/or a type of a respective hardware component (2),
- Providing (102) the machine learning model (50),
- Converting (103) the machine learning model (50) to an intermediate representation, the intermediate representation depicting a topology and/or a temporal structure of the machine learning model (50) as a graph structure,
- Analysing (104) the intermediate representation to determine a memory footprint of the machine learning model (50), wherein the memory footprint comprises an information regarding read and/or write accesses of the machine learning model (50) over a Dynamic Random Access Memory (4) and/or a Static Random Access Memory (5) of the initial hardware architecture (1),
- Determining (105) the hardware architecture (3) for the machine learning model (50) based on the initial hardware architecture (1) and a result of the analysing (104), the hardware architecture providing an allocation of specific hardware components (2) within the memory hierarchy based on the determined memory footprint, considering factors like buffer size, bandwidth, and hardware component type.

2. The method (100) of any one of the preceding claims, **characterized in that** the intermediate representation is a directed acyclic graph and/or an Abstract Syntax Tree.

3. The method (100) of any one of the preceding claims, **characterized in that** determining (105) the hardware architecture (3) comprises:
- Performing at least one compiler optimisation, particularly including loop unrolling and/or loop tiling.

4. The method (100) of any one of the preceding claims, **characterized in that** the method (100) further comprises:
- Providing a composite function for at least one parameter in a hardware configuration space for configuring the initial hardware architecture (1), the composite function determining a multi-objective goal of an accuracy of the machine learning model (50) and/or a latency in an execution of the machine learning model (50) and/or an energy consumption of the machine learning model (50).

5. The method (100) of claim 4, **characterized in that** the method (100) further comprises:
- Estimating a required energy consumption and/or performance for the hardware architecture (3) based on a result of the analysing (104) of the intermediate representation,
- Utilizing the provided composite function to determine a range of values for the at least one parameter in the hardware configuration space based on the estimated energy consumption and/or performance.

6. The method (100) of claim 5, **characterized in that** the method (100) further comprises:
- Deploying the hardware architecture (3), wherein the initial hardware architecture (1) is configured based on the determined range of values for the at least one parameter in the hardware configuration space.

7. A computer program (20), comprising instructions which, when the computer program (20) is executed by at least one computer (10), cause the computer (10) to carry out the method (100) of any one of the preceding claims.

8. A data processing apparatus (10), comprising means for carrying out the method (100) of any one of claims 1 to 6.

9. A computer-readable storage medium (15) comprising instructions which, when executed by at least one computer (10), cause the computer (10) to carry out the steps of the method (100) of any one of claims 1 to 6.
